# EUROPEAN PATENT SPECIFICATION

(11) **EP 4 179 402 B1**
(45) Date of publication and mention of the grant of the patent: **25.09.2024**
(21) Application number: 21766305.3
(22) Date of filing: 13.08.2021
(51) Int. Cl.: G05D 11/13

(54) **SYSTEM AND METHOD FOR APPLYING A WAX COATING TO A WORKPIECE DURING A STRAP-MANUFACTURING PROCESS**
SYSTEM UND VERFAHREN ZUM AUFBRINGEN EINER WACHSBESCHICHTUNG AUF EIN WERKSTÜCK WÄHREND EINES BANDHERSTELLUNGSVERFAHRENS
SYSTÈME ET PROCÉDÉ D'APPLICATION D'UN REVÊTEMENT DE CIRE SUR UNE PIÈCE À USINER AU COURS D'UN PROCESSUS DE FABRICATION DE BANDE

(30) Priority: 27.08.2020 US 202063070986 P
(43) Date of publication of application: 17.05.2023
(73) Proprietor: Signode Industrial Group LLC, Tampa, FL 33637 (US)
(72) Inventor: CLONTZ, Tonya, Dry Ridge, KY 41035 (US); WITCZAK, Stanislaw, Lincolnshire, IL 60069 (US); SCOTT, Lucas C., Northbrook, IL 60062 (US); BANGMA, Timothy, Grand Rapids, MI 49512 (US); BILLIN, Kyle, Grand Rapids, MI 49512 (US); LAZARCZYK, Gregory G., Granger, IN 46530 (US)
(74) Representative: Bardehle Pagenberg Partnerschaft mbB Patentanwälte Rechtsanwälte
(86) International application number: PCT/US2021/045869
(87) International publication number: WO 2022/046434

(56) References cited:
- US-A1- 2002 036 950
- US-A1- 2007 119 816
- US-B2- 10 739 795

## Description

### Priority

This application claims priority to and the benefit of U.S. Provisional Patent Application No. 63/070,986, filed August 27, 2020.

### Field

The present disclosure relates to wax-application systems and methods, and more particularly to systems and methods for applying a wax coating to a workpiece during a strap-manufacturing process.

### Background

For decades companies have relied on metal and plastic strap to bundle products together and to secure them to pallets for transport and storage. Certain types of strap have a wax coating on their outer surface. This waxed strap has a lower coefficient of friction than un-waxed strap, which results in waxed strap moving more easily through components of strapping equipment than un-waxed strap and which results in waxed strap being less likely to snag and require equipment shutdown than un-waxed strap. The wax coating also leads to a cleaner environment in and around the strapping equipment. When un-waxed strap rubs against various components of the strapping equipment, small particles shed from the strap create "dust" in and around the strapping equipment. The wax coating reduces this friction and minimizes particle shedding. The wax coating also improves weld quality. Strapping equipment includes a weld head that, after a segment of strap is wrapped around the load, attaches the two ends of the segment of strap together. Certain weld heads, such as friction welders, generate an optimal weld when the strap has a wax coating distributed on its outer surfaces within a certain range of thicknesses. The weld heads cannot achieve this optimal weld with un-waxed strap.

In one known manufacturing process for plastic strap, resin is melted and extruded into a (continuous) workpiece that is passed over several rollers that cool the workpiece and reduce it to a specified thickness. Afterwards the workpiece is pulled through a bath filled with a water/wax solution. Some of the water/wax solution remains on the outer surface of the workpiece as it exits the bath. The workpiece is dried (either passively or actively), leaving a wax coating distributed on the outer surface of the workpiece. The workpiece is longitudinally slit and wound into individual coils of waxed strap for shipment to the customer.

This use of a water/wax solution bath to apply the wax coating to the workpiece can result in an inconsistent distribution of the wax. Upon startup of the manufacturing process, the water/wax solution has a desired concentration of wax (e.g., a desired weight percentage (wt%) of wax in the water/wax solution) that correlates to a desired distribution of the wax coating on the workpiece. This means that upon startup and for a period of time thereafter the wax coating applied to the workpiece has the desired distribution. But this does not last because the water/wax solution bath is neither constantly replenished, nor circulated, nor temperature controlled. Over time this leads to some of the wax precipitating out of the water/wax solution and settling to the bottom of the water/wax solution bath, which the workpiece does not pass through as it moves through the bath. This precipitation dilutes the remaining water/wax solution that the workpiece passes through, which means that over time the concentration of wax in the water/wax solution falls below the desired concentration of wax. This results in a thinner-than-desired distribution of wax coating on the workpiece, leading to strap with suboptimal weld performance and increased "dusting" as compared to wax with the desired thickness of wax coating. Attempts to mitigate this by increasing the initial concentration of wax in the water/wax solution above the desired concentration of wax initially results in strap with a thicker-than-desired wax coating, which leads to suboptimal welding and reduced weld strength.
US 2002/036950 A1 relates to a process for preparing a liquid concentrate for use in the manufacture of plastic parts (including without limitation, as part of the sampling, evaluation and approval process before a plastic part goes into production) comprising: (a) preparing one or more liquid intermediates, wherein the liquid intermediates comprise a liquid vehicle and at least one additive (which may include a pigment, dye or other additive); (b) standardizing the liquid intermediates; (c) transferring the standardized liquid intermediates to a remote location; and (d) dispensing the liquid intermediates to produce a liquid concentrate, wherein the quantity of each liquid intermediate dispensed is controlled according to a predetermined formula for the liquid concentrate. The present invention also provides a process for preparing a liquid concentrate for use in the manufacture of plastic parts comprising: (a) providing one or more liquid intermediates, wherein the liquid intermediates comprise a liquid vehicle and at least one additive (which may include a pigment, dye or other additive), wherein the liquid intermediates are standardized, and wherein the liquid intermediates have been prepared remotely; and (b) dispensing the liquid intermediates to produce a liquid concentrate, wherein the quantity of each liquid intermediate dispensed is controlled according to a predetermined formula for the liquid concentrate. The present invention also provides a process for preparing a liquid concentrate as described above using a dispensing system which includes a dispensing machine and mixing equipment which may be controlled by a computer or operated manually at the location where the dispensing is done to produce the liquid concentrate; and which may include the manual "hand add" of one or more components of the predetermined formula before the mixing step.

### Summary

Various embodiments of the present disclosure provide a system and method for applying a wax coating to a workpiece during a strap-manufacturing process. A controller controls the flow of water and the flow of a wax solution from separate sources into a blender that blends the water and the wax solution into a blended solution. An applicator applies the blended solution to a workpiece that is then longitudinally slit and wound into coils of (waxed) strap. A sensor periodically analyzes the blended solution and sends signals to the controller, which determines the concentration of wax in the blended solution and causes a display device to display the concentration of wax in the blended solution to enable an operator to monitor the concentration of wax in the blended solution.

In certain embodiments, the controller monitors the concentration of wax in the blended solution. If the concentration of wax in the blended solution differs from a wax-concentration set point that correlates to a desired thickness of the wax coating on the workpiece, the controller automatically modifies the flow of the water and/or the flow of the wax solution into to the blender such that the concentration of wax in the blended solution returns to the wax-concentration set point. By maintaining the concentration of wax in the blended solution at the wax-concentration set point, the system ensures that the workpiece has a wax coating of consistent thickness.

### Brief Description of the Figures

Figure 1 is a block diagram of some of the components of an example embodiment of the wax-application system of the present disclosure.
Figure 2 is a diagrammatic elevational view of the applicator of the wax-application system of Figure 1 applying blended solution to the workpiece.
Figure 3 is a flowchart of an example wax-application process of the present disclosure carried out by the wax-application system of Figure 1.
Figure 4 is a flowchart of an example wax-concentration-monitoring process of the present disclosure carried out by the wax-application system of Figure 1.

### Detailed Description

While the systems, devices, and methods described herein may be embodied in various forms, the drawings show and the specification describes certain exemplary and non-limiting embodiments. Not all of the components shown in the drawings and described in the specification may be required, and certain implementations may include additional, different, or fewer components. Variations in the arrangement and type of the components; the shapes, sizes, and materials of the components; and the manners of connections of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as mounted, connected, etc., are not intended to be limited to direct mounting methods but should be interpreted broadly to include indirect and operably mounted, connected, and like mounting methods. This specification is intended to be taken as a whole and interpreted in accordance with the principles of the present disclosure and as understood by one of ordinary skill in the art.

Various embodiments of the present disclosure provide a system and method for applying a wax coating to a workpiece during a strap-manufacturing process. A controller controls the flow of water and the flow of a wax solution from separate sources into a blender that blends the water and the wax solution into a blended solution. An applicator applies the blended solution to a workpiece that is then longitudinally slit and wound into coils of (waxed) strap. A sensor periodically analyzes the blended solution and sends signals to the controller, which determines the concentration of wax in the blended solution and causes a display device to display the concentration of wax in the blended solution to enable an operator to monitor the concentration of wax in the blended solution. In certain embodiments, the controller monitors the concentration of wax in the blended solution. If the concentration of wax in the blended solution differs from a wax-concentration set point that correlates to a desired thickness of the wax coating on the workpiece, the controller automatically modifies the flow of the water and/or the flow of the wax solution into to the blender such that the concentration of wax in the blended solution returns to the wax-concentration set point. By maintaining the concentration of wax in the blended solution at the wax-concentration set point, the system ensures that the workpiece has a wax coating of consistent thickness.

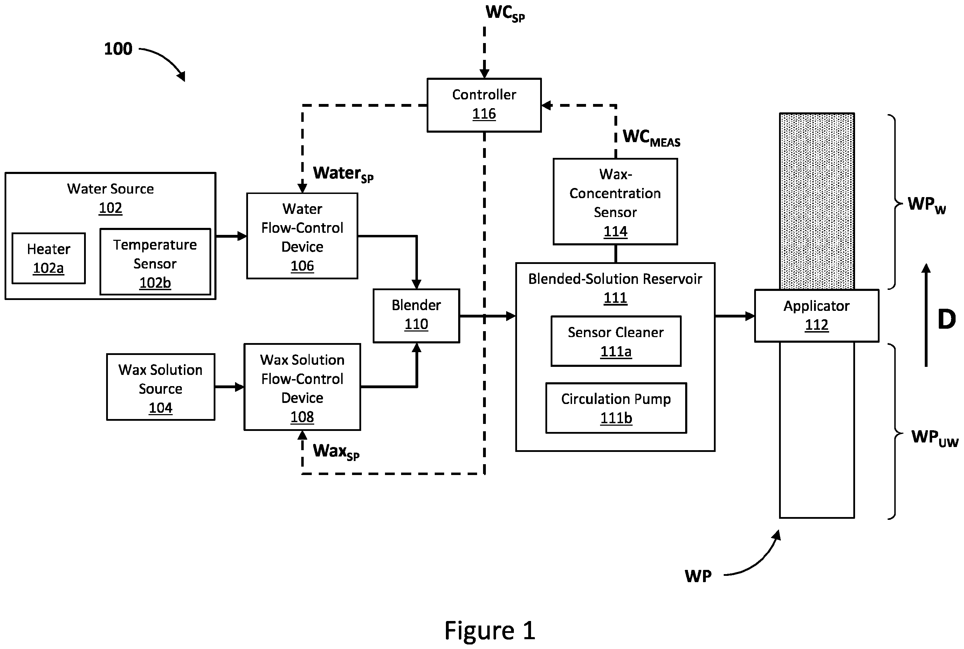

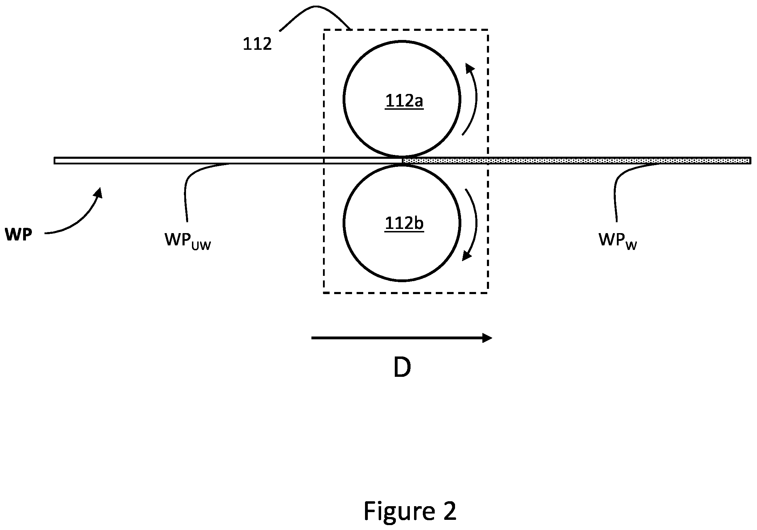

Figures 1 and 2 illustrate one example embodiment of a wax-application system 100 of the present disclosure and components thereof. Generally, the wax-application system 100 is operable to blend water drawn from a water source 102 with wax solution drawn from a wax-solution source 104 to create a blended solution having a desired concentration of wax to apply to a workpiece WP during a strap-manufacturing process. More specifically, in this example embodiment, the wax-application system 100 is operable to apply the blended solution to the workpiece WP after the workpiece is extruded, cooled, and thinned to a specified thickness and before the workpiece is cut to length and wound into coils of (waxed) strap (though in other embodiments the wax-application system is operable to apply the blended solution to the workpiece at any suitable point in time during the strap-manufacturing process). This example embodiment of the wax-application system 100 is therefore an "in-line" system that forms part of the strap-manufacturing process as opposed to a standalone "post-processing" system that surface treats the strap after it has been manufactured (though in other embodiments the wax-application system functions as this type of standalone post-processing system).

The wax-application system 100 includes a water flow-control device 106, a wax solution flow-control device 108, a blender 110, a blended-solution reservoir 111 including a sensor cleaner 111a and a circulation pump 111b, an applicator 112, a wax-concentration sensor 114, and a controller 116. The wax-application system 100 is fluidly connectable to the water source 102, which includes a reservoir storing deionized water (though it may store any other suitable solute in other embodiments), a heater 102a, and a temperature sensor 102b. The heater 102a is any suitable device configured to heat the water in the water source 102. The temperature sensor 102b is any suitable sensor configured to measure the temperature of the water in the water source 102 and to generate and send a signal indicative of the temperature of the water. The wax-application system 100 is also fluidly connectable to the wax-solution source 104, which includes a reservoir storing a solution of water and wax having a suitable wax concentration greater than WC_{SP}, described below. In this example embodiment, the wax is a silicone wax (though the wax may be any suitable type of wax in other embodiments).

The water flow-control device 106 is configured to control the flow of the water from the water source 102 to the blender 110 and, more particularly, the mass flow rate of the water from the water source 102 to the blender 110. The water flow-control device 106 includes a water inlet and a water outlet (not labeled) in fluid communication with one another. The water flow-control device 106 is any suitable device configured to (directly or indirectly) control the mass flow rate of the water into the blender 110 and may include, for instance, a pump, a compressor, a metering valve, or any other suitable system or component(s).

The wax solution flow-control device 108 is configured to control the flow of the wax solution from the wax solution source 104 to the blender 110 and, more particularly, the mass flow rate of the wax solution from the wax solution source 104 to the blender 110. The wax solution flow-control device 108 includes a wax solution inlet and a wax solution outlet (not labeled) in fluid communication with one another. The wax solution flow-control device 108 is any suitable device configured to (directly or indirectly) control the mass flow rate of the wax solution into the blender 110, and may include, for instance, a pump, a compressor, a metering valve, or any other suitable system or component(s).

The blender 110 is configured to receive the water and the wax solution from the water flow-control device 106 and the wax solution flow-control device 108, respectively; to actively or passively (depending on the embodiment) blend them together to create a blended solution; and to deliver the blended solution to the blended-solution reservoir 111. The blender 110 includes a water inlet, a wax-solution inlet, a blending area in fluid communication with the water and wax-solution inlets, and an outlet in fluid communication with the blending area. In this example embodiment the blender 110 is a passive blender that includes static fins that direct the water and the wax solution in such a way as to create turbulence that blends them together. In other embodiments the blender may include any suitable device configured to blend water and wax solution together, such as a driven mechanical paddle mixer.

The blended-solution reservoir 111 is any suitable reservoir, such as a tank, configured to receive the blended solution from the blender 110, store the blended solution, and deliver the blended solution to the applicator 112. The blended-solution reservoir 111 includes an inlet, an outlet in fluid communication with the inlet, a sensor cleaner 111a, and a circulation pump 111b. The sensor cleaner 111a is operably connected to and configured to clean the wax-concentration sensor 114 (described below). In this example embodiment, the sensor cleaner 111a includes a pump in fluid communication with the water source 102 (or any other suitable water source) and configured to direct pressurized water from the water source 102 onto the wax-concentration senor 114 (such as onto a lens or other sensing element of the wax-concentration sensor 114) to clean any debris off of the wax-concentration sensor 114. The sensor cleaner 111a may be any other suitable cleaning device, such as an ultrasonic cleaner. The circulation pump 111b is any suitable pump configured to circulate (either constantly or periodically depending on the embodiment) the blended solution stored in the blended-solution reservoir to help prevent wax from precipitating out of the blended solution.

The applicator 112 is configured to apply the blended solution to the outer surfaces of the workpiece WP. The applicator 112 includes a blended-solution inlet in fluid communication with the blended-solution reservoir 111. As shown in Figure 2, in this example embodiment, the applicator 112 is a roller-type applicator that includes opposing first (upper) and second (lower) application rollers 112a and 112b that sandwich the workpiece WP therebetween. The first and second application rollers 112a and 112b each include a perforated dispenser tube covered by an absorbent roller cover (such as a felt or foam roller cover). The blended solution is introduced into the dispenser tubes and flows through the perforations in the tubes and into the roller covers, which absorb and become saturated with the blended solution. As shown in Figure 2, the first and second application rollers 112a and 112b rotate in opposing directions and contact the outer surfaces of the workpiece WP as the workpiece WP passes between them. As this occurs, the roller covers apply the blended solution to the outer surfaces of the workpiece. This is merely one example embodiment, and the applicator 112 may include any other suitable applicator, such as a spray applicator including one or more nozzles configured to spray the blended solution onto the outer surfaces of the workpiece, a wiper applicator that wipes the blended solution on the strap, or a dip tank and squeegee.

The wax-concentration sensor 114 is configured to analyze the blended solution, generate a signal indicative of the concentration of wax in the blended solution, and transmit that signal to the controller 116. In this example embodiment, the wax-concentration sensor 114 includes a refractometer configured to determine the refractive index of the blended wax/water solution and to transmit a signal representing this refractive index to the controller 116. This is merely one example, and the wax-concentration sensor 114 may include any other suitable sensor in other embodiments, such as a pH sensor or a solution-conductivity sensor.

The controller 116 includes a central processing unit (CPU) (not shown) communicatively connected to a memory (not shown). The CPU is configured to execute program code or instructions stored on the memory to control operation of various components of the wax-application system 100. The CPU may be a microprocessor; a content-addressable memory; a digital-signal processor; an application-specific integrated circuit; a field-programmable gate array; any suitable programmable logic device, discrete gate, or transistor logic; discrete hardware components; or any combination of these. The CPU may also be implemented as a combination of these devices, such as a combination of a digital signal processor and a microprocessor, a plurality of microprocessors, or one or more microprocessors in conjunction with a digital signal processor core. The memory is configured to store, maintain, and provide data as needed to support the functionality of the wax-application system 100. For instance, in various embodiments, the memory stores program code or instructions executable by the CPU to control operation of the wax-application system 100. The memory includes any suitable data storage device or devices, such as volatile memory (e.g., random-access memory, dynamic random-access memory, or static random-access memory); non-volatile memory (e.g., read-only memory, mask read-only memory, programmable read-only memory, erasable programmable read-only memory, electrically erasable programmable read-only memory); and/or non-volatile random-access memory (e.g., flash memory, solid-state storage).

The water inlet of the water flow-control device 106 is fluidly connectable to the water source 102 to enable the water flow-control device 106 to draw water from the water source 102. The water outlet of the water flow-control device 106 is in fluid communication with the water inlet of the blender 110. The water flow-control device 106 is therefore downstream of the water source 102 and upstream of the blender 110. As used herein, "downstream" refers to the direction of fluid flow (i.e., water, wax solution, and blended solution flow) through the wax-application system 100, and "upstream" refers to the direction opposite the direction of fluid flow through the wax-application system 100.

The wax solution inlet of the wax solution flow-control device 108 is fluidly connectable to the wax solution source 104 to enable the wax solution flow-control device 108 to draw water from the wax solution source 104. The wax solution outlet of the wax solution flow-control device 108 is in fluid communication with the wax solution inlet of the blender 110. The wax solution flow-control device 108 is therefore downstream of the wax solution source 104 and upstream of the blender 110.

The outlet of the blender 110 is in fluid communication with the inlet of the blended-solution reservoir 111. The blender 110 is therefore downstream of the water and wax solution flow-control devices 106 and 108 and upstream of the blended-solution reservoir 111.

The outlet of the blended-solution reservoir 111 is in fluid communication with the blended-solution inlet of the applicator 112. The blended-solution reservoir 111 is therefore downstream of the blender 110 and upstream of the applicator 112.

The wax-concentration sensor 114 is in communication with the blended solution (such that the wax-concentration sensor can analyze the blended solution) downstream of the blender 110 and upstream of the applicator 112. In this example embodiment, the wax-concentration sensor 114 is in communication with the blended solution within the blended-solution reservoir 111, though in other embodiments the wax-concentration sensor is integrated into the blender or the applicator.

The controller 116 is communicatively connected to the wax-concentration sensor 114 to receive the signal indicative of the concentration of wax in the blended solution, which is identified herein as WC_{MEAS}. More specifically, in this example embodiment in which the wax-concentration sensor 114 includes a refractometer, WC_{MEAS} represents the refractive index of the blended wax/water solution. The controller 116 is configured to determine the concentration of the blended solution based on this refractive index, such as via a lookup table that correlates refractive indices to wax concentrations or via an algorithm stored on the memory device. The refractive index measured by the wax-concentration sensor 114 of this example embodiment is therefore indicative of the concentration of wax in the blended solution.

The controller 116 is operatively connected to the water flow-control device 106 to control the water flow-control device 106 by providing the water flow-control device 106 a water flow-control device set point Water_{SP}. Water_{SP} corresponds to a particular output of the water flow-control device 106 (such as a particular quantity of liters per minute if the water flow-control device 106 is a pump) that itself corresponds to a particular mass flow rate of water into the blender 110. The controller 116 is therefore configured to control the mass flow rate of water into the blender 110 via the particular Water_{SP} the controller 116 provides to the water flow-control device 106.

Similarly, the controller 116 is operatively connected to the wax solution flow-control device 108 to control the wax solution flow-control device 108 by providing the wax solution flow-control device 108 a wax solution flow-control device set point Wax_{SP}. Wax_{SP} corresponds to a particular output of the wax solution flow-control device 108 (such as a particular quantity of liters per minute if the wax solution flow-control device 108 is a pump) that itself corresponds to a particular mass flow rate of wax solution into the blender 110. The controller 116 is therefore configured to control the mass flow rate of wax solution into the blender 110 via the particular Wax_{SP} the controller 116 provides to the wax solution flow-control device 108.

The controller 116 is communicatively connected to the temperature sensor 102b to receive the signal indicative of the temperature of the water in the water source 102. The controller 116 is operatively connected to the heater 102a. The controller 116 is configured to monitor the temperature of the water in the water source 102 and, when the measured temperature falls below a temperature set point (such as 105 degrees Fahrenheit or any other suitable temperature), controls the heater 102a to raise the temperature of the water until the measured temperature reaches the temperature set point.

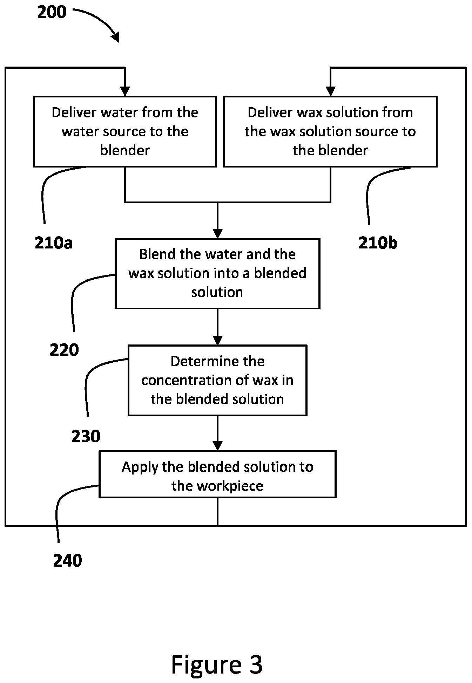

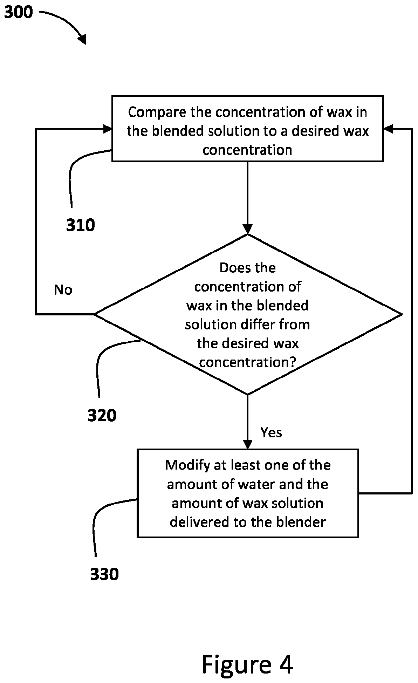

Operation of the wax-application system 100 is now described with respect to the flowcharts shown in Figure 3 and Figure 4. Figure 3 is a flowchart indicative of a wax-application process 300. Figure 4 is a flowchart indicative of a wax-concentration-monitoring process 400. As described in detail below, the controller 116 is configured to control certain components of the wax-application system 100 to carry out the wax-application process 300 and the wax-concentration-monitoring process 400 substantially simultaneously and continuously so long as the wax-application system 100 is operating.

Turning now to Figure 3, water is delivered from the water source to the blender, as block 210a indicates. For instance, referring to the example embodiment described above and shown in Figures 1 and 2, the controller 116 is configured to provide Water_{SP} (which may be stored in the memory of the controller 116) to the water flow-control device 106 to control the water flow-control device 106 to provide a corresponding mass flow rate of water into the blender 110. At the same time, wax solution is delivered from the wax solution source to the blender, as block 210b indicates. Continuing with the above example, the controller 116 is configured to provide Wax_{SP} (which may be stored in the memory of the controller 116) to the wax solution flow-control device 108 to control the wax solution flow-control device 106 to provide a corresponding mass flow rate of wax solution into the blender 110.

The water and the wax solution are then blended into a blended solution, as block 220 indicates. Continuing with the above example, the blender 110 blends the water and the wax solution received from the water and wax solution flow-control devices 106 and 108, respectively, into the blended solution. The concentration of wax in the blended solution is determined, as block 230 indicates. Continuing with the above example, the wax-concentration sensor 114 analyzes the blended solution, generates a signal indicative of the concentration of wax in the blended solution, and sends that signal to the controller 116. The controller 116 determines the concentration of wax in the blended solution based on this signal. In certain embodiments, the controller 116 causes an output device, such as a display device or a speaker, to output an indication representative of the concentration of wax in the blended solution to enable an operator to monitor the concentration of wax in the blended solution. The blended solution is then applied to the workpiece, as block 240 indicates. Continuing with the above example, the workpiece WP enters the applicator 112 via the blended-solution reservoir 111. The first and second application rollers 112a and 112b, which have rollers covers that are saturated with the blended solution, contact and apply the blended solution to the workpiece WP, which then exits the applicator 112 for further processing. WP_{UW} identifies the portion of the workpiece before the blended solution is applied, and WP_{w} identifies the portion of the workpiece after the blended solution is applied.

Turning to Figure 4, as the blended solution is applied to the workpiece via the wax-application process 300, the concentration of wax in the blended solution is compared to a desired wax concentration (or in other embodiments, a desired range of wax concentrations), as block 310 indicates. If it is determined at diamond 320 that the concentration of wax in the blended solution does not differ from the desired wax concentration (or that the concentration of wax in the blended solution is within the desired range of wax concentrations), the process 300 returns to block 310. On the other hand, if it is determined at diamond 320 that the concentration of wax in the blended solution differs from the desired wax concentration (or is outside the desired range of wax concentrations), at least one of the amount of water and the amount of wax solution delivered to the blender is modified, as block 330 indicates, and the process 300 returns to block 310.

Continuing with the above example, the controller 116 stores a wax-concentration set point WC_{SP}, which represents a desired concentration of wax in the blended solution downstream of the blender 110. The wax-concentration set point WC_{SP} correlates to a wax coating of a desired thickness (or within a desired range of thicknesses) on the workpiece, and is determined in any suitable manner (such as via lookup table or via user input). In this example embodiment, WC_{SP} is 5.75 wt% wax, though it may be any other suitable concentration in other embodiments (such as a concentration between 4-6 wt% wax). The controller 116 receives WC_{MEAS}, which is the signal indicative of the concentration of wax in the blended solution, from the wax-concentration 114. The controller 116 is configured to calculate the arithmetic mean, the median, or other suitable average wax concentration using multiple signals received during a time period (though in other embodiments WC_{MEAS} represents a wax concentration based on only one signal).

The controller 116 (and in this example embodiment a PID module of the controller 116) is configured to calculate the difference (if any) between WC_{SP} and WC_{MEAS} and, if WC_{SP} and WC_{MEAS} are different, controls the output of the water flow-control device 106 and/or the wax solution flow-control device 108 to reduce the difference between WC_{SP} and WC_{MEAS}. The controller 116 is configured to do so by using the difference between WC_{SP} and WC_{MEAS} to modify: (1) Water_{SP}, which the controller 116 provides to the water flow-control device 106 to control the mass flow rate of water into the blender 110; (2) Wax_{SP}, which the controller 116 provides to the wax solution flow-control device 108 to control the mass flow rate of wax solution into the blender 110; or (3) both Water_{SP} and Wax_{SP} to modify the amount of water and/or the amount of wax solution directed to the blender 110 to reduce the difference between WC_{SP} and WC_{MEAS}. In this embodiment, the controller 116 is therefore configured to modulate the output of the water flow-control device 106, the wax solution flow-control device 108, or both to converge WC_{MEAS} to WC_{SP}.

In one example scenario, the controller 116 determines that WC_{MEAS} is greater than WC_{SP}, meaning that the concentration of wax in the blended solution is higher than desired. The controller 116 modifies Water_{SP} to increase the mass flow rate of water into the blender 110, modifies Wax_{SP} to decrease the mass flow rate of wax solution into the blender 110, or both to reduce the concentration of wax in the blended solution. In an opposite example scenario, the controller determines that WC_{MEAS} is less than WC_{SP}, meaning that the concentration of wax in the blended solution is lower than desired. The controller 116 modifies Water_{SP} to decrease the mass flow rate of water into the blender 110, modifies Wax_{SP} to increase the mass flow rate of wax solution into the blender 110, or both to increase the concentration of wax in the blended solution.

Since modifying Water_{SP}, Wax_{SP}, or both would lead to the same result (lowering or raising the concentration of wax in the blended solution), in certain embodiments the controller determines which to do based on a target flowrate range for the blended solution. More specifically, in these embodiments, to ensure the applicator properly applies the blended solution to the workpiece, the blended solution is delivered to the applicator 112 within a target flowrate range. The controller 116 is therefore configured to modify Water_{SP}, Wax_{SP}, or both to converge WC_{MEAS} to WC_{SP} such that the flow rate of the blended solution remains within the target flowrate range.

In this example embodiment, as the blended solution is applied to the workpiece via the wax-application process, the controller 116 also determines whether the sensor cleaner 111a should be activated to clean the wax-concentration sensor 114. Generally, the controller 116 determines whether the wax-concentration sensor 114 has been coated with debris such that it is not providing an accurate measurement of the concentration of wax in the blended solution and, in response, determines that the sensor cleaner 111a should be activated. Specifically, the controller 116 determines that the wax-concentration sensor 114 has been coated with debris when the measured concentration of wax in the blended solution has not changed more than a designated amount within a designated period of time. For instance, if the controller 116 determines that the measured concentration of was in the blended solution has not changed more than 0.05% (or any other suitable amount) within a five-minute time frame (or any other suitable time frame), the controller 116 determines that the sensor cleaner 111a should be activated to clean the wax-concentration sensor 114. In certain embodiments, the controller 116 automatically activates the sensor cleaner 111a to clean the wax-concentration sensor 111a. In other embodiments in which the sensor cleaner 111a is manually activatable by an operator, the controller 116 controls an output device (such as a display or a speaker) to output an indication instructing the operator to activate the sensor cleaner 111a. In other embodiments, the controller 116 is not configured to monitor the measured concentration of wax in the blended solution to determine whether to activate the sensor cleaner 111a and, instead, automatically activates the sensor cleaner 111a (or instructs the operator to activate the sensor cleaner 111a) according to a preset schedule (such as every five minutes). In further embodiments, the wax-application system 10 does not include a sensor cleaner 111a.

The wax-application system of the present disclosure solves the above problems. By periodically monitoring the concentration of wax in the blended solution and controlling the flow of the water and the wax solution into the blender to maintain the concentration of wax in the blended solution at the wax-concentration set point (or by providing an operator the concentration of wax in the blended solution and enabling the operator to control the flow of the water and the wax solution into the blender), the system ensures that the workpiece has a wax coating distributed at the desired thickness (or within a desired range of thicknesses).

## Claims

1. A wax-application system (100) for applying a wax coating to a workpiece (WP) during a strap-manufacturing process, the wax-application system comprising:
a blender (110) configured to blend a wax solution and water into a blended solution;
a water flow-control device (106) in fluid communication with the blender and configured to deliver the water to the blender at a water mass flow rate;
a wax solution flow-control device (108) in fluid communication with the blender and configured to deliver the wax solution to the blender at a wax solution mass flow rate;
an applicator (112) in fluid communication with the blender and configured to apply the blended solution to the workpiece;
a sensor configured to analyze the blended solution and generate a signal indicative of a concentration of wax in the blended solution; and
a controller (116) communicatively connected to the sensor and operably connected to the water flow-control device and the wax solution flow-control device, the controller configured to:
control the water flow-control device (106) to deliver the water to the blender at the water mass flow rate;
control the wax solution flow-control device (108) to deliver the wax solution to the blender at the wax solution mass flow rate;
receive the signal from the sensor; and
cause an output device to output an indication representing the concentration of wax in the blended solution.

2. The wax-application system of claim 1, wherein the controller is further configured to determine the concentration of wax in the blended solution based on the signal.

3. The wax-application system of claim 1 or 2, wherein the controller is further configured to determine, based at least in part on the signal, whether the concentration of wax in the blended solution differs from a wax-concentration set point.

4. The wax-application system of claim 3, wherein the controller (116) is further configured to, responsive to determining that the concentration of wax in the blended solution differs from the wax-concentration set point, control at least one of (1) the water flow-control device and (2) the wax solution flow-control device such that at least one of (a) the water mass flow rate and (b) the wax solution mass flow rate changes to reduce the difference between the concentration of wax in the blended solution and the wax-concentration set point.

5. The wax-application system of claim 4, wherein the wax-concentration set point comprises a first wax-concentration set point representing a lower bound of a desired range of wax concentrations, wherein a second wax-concentration set point represents an upper bound of the desired range of wax concentrations, wherein the controller (116) is further configured to, responsive to determining that the concentration of wax in the blended solution is below the first wax-concentration set point or above the second wax-concentration set point, control at least one of (1) the water flow-control device and (2) the wax solution flow-control device such that at least one of (a) the water mass flow rate and (b) the wax solution mass flow rate changes to bring the concentration of wax in the blended solution into the desired range of wax concentrations.

6. The wax-application system of claim 4, or of claim 3 referred back to claim 2, wherein the controller (116) is further configured to, responsive to determining that the concentration of wax in the blended solution is greater than the wax-concentration set point, control at least one of (1) the water flow-control device and (2) the wax solution flow-control device such that at least one of (a) the water mass flow rate increases and (b) the wax solution mass flow rate decreases to reduce the concentration of wax in the blended solution.

7. The wax-application system of claim 6, wherein the controller (116) is further configured to, responsive to determining that the concentration of wax in the blended solution is less than the wax-concentration set point, control at least one of (1) the water flow-control device and (2) the wax solution flow-control device such that at least one of (a) the water mass flow rate decreases and (b) the wax solution mass flow rate increases to increase the concentration of wax in the blended solution.

8. The wax-application system of claim 7, wherein the controller (116) is further configured to:
provide the water flow-control device (106) a water flow-control device set point that corresponds to the water mass flow rate such that varying the water flow-control device set point varies the water mass flow rate,
provide the wax solution flow-control device (108) a wax solution flow-control device set point that corresponds to the wax solution mass flow rate such that varying the wax solution flow-control device set point varies the wax solution mass flow rate,
control at least one of (1) the water flow-control device and (2) the wax solution flow-control device such that at least one of (a) the water mass flow rate increases and (b) the wax solution mass flow rate decreases by varying at least one of (x) the water flow-control device set point and (y) the wax solution flow-control device set point; and
control at least one of (1) the water flow-control device and (2) the wax solution flow-control device such that at least one of (a) the water mass flow rate decreases and (b) the wax solution mass flow rate increases by varying at least one of (x) the water flow-control device set point and (y) the wax solution flow-control device set point.

9. The wax-application system of any of claims 1-8, wherein the sensor comprises a refractometer configured to determine a refractive index of the blended solution, wherein the signal represents the refractive index of the blended solution.

10. The wax-application system of claim 1, or of claim 9 referred back to claim 7, or of claim 9 referred back to claim 8, or of claim 4 referred back to claim 3, wherein the applicator (112) comprises opposing first and second application rollers (112a, 112b), each application roller comprising a roller cover configured to absorb the blended solution, wherein the first and second application rollers are spaced apart so the respective roller covers contact and apply the blended solution to opposing outer surfaces of the workpiece as the workpiece moves between the first and second application rollers.

11. The wax-application system of claim 1, wherein the controller (116) is further configured to monitor the concentration of wax in the blended solution over time and, responsive to determining that that the concentration of wax in the blended solution has not changed at least a designated amount within a designated time period, determine that the sensor needs cleaning.

12. The wax-application system of claim 11, further comprising a sensor cleaner (111a), wherein the controller is operably connected to the sensor cleaner and configured to activate the sensor cleaner to clean the sensor responsive to determining that the sensor needs cleaning.

13. A wax-application method for applying a wax coating to a workpiece (WP) during a strap-manufacturing process, the method comprising:
directing water from a water source to a blender at a water mass flow rate;
directing a wax solution from a wax solution source to the blender at a wax solution mass flow rate;
blending the water and the wax solution into a blended solution;
applying the blended solution to an outer surface of the workpiece;
determining a concentration of wax in the blended solution; and
outputting an indication representing the concentration of wax in the blended solution.

14. The wax-application method of claim 13, further comprising determining whether the concentration of wax in the blended solution differs from a wax-concentration set point.

15. The wax-application method of claim 14, further comprising, responsive to determining that the concentration of wax in the blended solution differs from the wax-concentration set point, changing at least one of (a) the water mass flow rate and (b) the wax solution mass flow rate to reduce the difference between the concentration of wax in the blended solution and the wax-concentration set point.

## Patentansprüche

1. Wachsaufbringungssystem (100) zum Aufbringen einer Wachsbeschichtung auf ein Werkstück (WP) während eines Bandherstellungsverfahrens, wobei das Wachsaufbringungssystem Folgendes umfasst:
einen Mischer (110), der dazu ausgestaltet ist, eine Wachslösung und Wasser zu einer gemischten Lösung zu mischen;
eine Wasser-Durchflussregelungsvorrichtung (106), die in Fluidverbindung mit dem Mischer steht und dazu ausgestaltet ist, das Wasser mit einem Wasser-Massenstrom dem Mischer zuzuführen;
eine Wachslösungs-Durchflussregelungsvorrichtung (108), die in Fluidverbindung mit dem Mischer steht und dazu ausgestaltet ist, die Wachslösung mit einem Wachslösungs-Massenstrom dem Mischer zuzuführen;
einen Applikator (112), der in Fluidverbindung mit dem Mischer steht und dazu ausgestaltet ist, die gemischte Lösung auf das Werkstück aufzubringen;
einen Sensor, der dazu ausgestaltet ist, die gemischte Lösung zu analysieren und ein Signal zu erzeugen, das eine Wachskonzentration in der gemischten Lösung angibt; und
eine Steuerung (116), die kommunikationstechnisch mit dem Sensor verbunden ist und mit der Wasser-Durchflussregelungsvorrichtung und der Wachslösungs-Durchflussregelungsvorrichtung wirkverbunden ist, wobei die Steuerung für Folgendes ausgestaltet ist:
Steuern der Wasser-Durchflussregelungsvorrichtung (106) dazu, das Wasser mit dem Wasser-Massenstrom dem Mischer zuzuführen;
Steuern der Wachslösungs-Durchflussregelungsvorrichtung (108) dazu, die Wachslösung mit dem Wachslösungs-Massenstrom dem Mischer zuzuführen;
Empfangen des Signals von dem Sensor; und
Bewirken, dass eine Ausgabevorrichtung eine Angabe ausgibt, welche die Wachskonzentration in der gemischten Lösung darstellt.

2. Wachsaufbringungssystem nach Anspruch 1, wobei die Steuerung ferner dazu ausgestaltet ist, basierend auf dem Signal die Wachskonzentration in der gemischten Lösung zu bestimmen.

3. Wachsaufbringungssystem nach Anspruch 1 oder 2, wobei die Steuerung ferner dazu ausgestaltet ist, wenigstens teilweise basierend auf dem Signal zu bestimmen, ob die Wachskonzentration in der gemischten Lösung von einem Wachskonzentrations-Sollwert abweicht.

4. Wachsaufbringungssystem nach Anspruch 3, wobei die Steuerung (116) ferner dazu ausgestaltet ist, als Reaktion auf ein Bestimmen, dass die Wachskonzentration in der gemischten Lösung von dem Wachskonzentrations-Sollwert abweicht, wenigstens eine aus (1) der Wasser-Durchflussregelungsvorrichtung und (2) der Wachslösungs-Durchflussregelungsvorrichtung derart zu steuern, dass wenigstens einer aus (a) dem Wasser-Massenstrom und (b) dem Wachslösungs-Massenstrom sich ändert, um die Abweichung zwischen der Wachskonzentration in der gemischten Lösung und dem Wachskonzentrations-Sollwert zu verringern.

5. Wachsaufbringungssystem nach Anspruch 4, wobei der Wachskonzentrations-Sollwert einen ersten Wachskonzentrations-Sollwert umfasst, der eine Untergrenze eines gewünschten Bereichs von Wachskonzentrationen darstellt, wobei ein zweiter Wachskonzentrations-Sollwert eine Obergrenze des gewünschten Bereichs von Wachskonzentrationen darstellt, wobei die Steuerung (116) ferner dazu ausgestaltet ist, als Reaktion auf ein Bestimmen, dass die Wachskonzentration in der gemischten Lösung unter dem ersten Wachskonzentrations-Sollwert oder über dem zweiten Wachskonzentrations-Sollwert liegt, wenigstens eine aus (1) der Wasser-Durchflussregelungsvorrichtung und (2) der Wachslösungs-Durchflussregelungsvorrichtung derart zu steuern, dass wenigstens einer aus (a) dem Wasser-Massenstrom und (b) dem Wachslösungs-Massenstrom sich ändert, um die Wachskonzentration in der gemischten Lösung in den gewünschten Bereich von Wachskonzentrationen zu bringen.

6. Wachsaufbringungssystem nach Anspruch 4, oder nach Anspruch 3 mit Rückbezug auf Anspruch 2, wobei die Steuerung (116) ferner dazu ausgestaltet ist, als Reaktion auf ein Bestimmen, dass die Wachskonzentration in der gemischten Lösung höher als der Wachskonzentrations-Sollwert ist, wenigstens eine aus (1) der Wasser-Durchflussregelungsvorrichtung und (2) der Wachslösungs-Durchflussregelungsvorrichtung derart zu steuern, dass wenigstens eines aus (a) einer Zunahme des Wasser-Massenstroms und (b) einer Abnahme des Wachslösungs-Massenstroms erfolgt, um die Wachskonzentration in der gemischten Lösung zu verringern.

7. Wachsaufbringungssystem nach Anspruch 6, wobei die Steuerung (116) ferner dazu ausgestaltet ist, als Reaktion auf ein Bestimmen, dass die Wachskonzentration in der gemischten Lösung niedriger als der Wachskonzentrations-Sollwert ist, wenigstens eine aus (1) der Wasser-Durchflussregelungsvorrichtung und (2) der Wachslösungs-Durchflussregelungsvorrichtung derart zu steuern, dass wenigstens eines aus (a) einer Abnahme des Wasser-Massenstroms und (b) einer Zunahme des Wachslösungs-Massenstroms erfolgt, um die Wachskonzentration in der gemischten Lösung zu erhöhen.

8. Wachsaufbringungssystem nach Anspruch 7, wobei die Steuerung (116) ferner für Folgendes ausgestaltet ist:
Bereitstellen - für die Wasser-Durchflussregelungsvorrichtung (106) - eines Wasser-Durchflussregelungsvorrichtungs-Sollwerts, der dem Wasser-Massenstrom entspricht, sodass ein Verändern des Wasser-Durchflussregelungsvorrichtungs-Sollwerts den Wasser-Massenstrom verändert,
Bereitstellen - für die Wachslösungs-Durchflussregelungsvorrichtung (108) - eines Wachslösungs-Durchflussregelungsvorrichtungs-Sollwerts, der dem Wachslösungs-Massenstrom entspricht, sodass ein Verändern des Wachslösungs-Durchflussregelungsvorrichtungs-Sollwerts den Wachslösungs-Massenstrom verändert,
Steuern wenigstens einer aus (1) der Wasser-Durchflussregelungsvorrichtung und (2) der Wachslösungs-Durchflussregelungsvorrichtung derart, dass wenigstens eines aus (a) einer Zunahme des Wasser-Massenstroms und (b) einer Abnahme des Wachslösungs-Massenstroms erfolgt, indem wenigstens einer aus (x) dem Wasser-Durchflussregelungsvorrichtungs-Sollwert und (y) dem Wachslösungs-Durchflussregelungsvorrichtungs-Sollwert verändert wird; und
Steuern wenigstens einer aus (1) der Wasser-Durchflussregelungsvorrichtung und (2) der Wachslösungs-Durchflussregelungsvorrichtung derart, dass wenigstens eines aus (a) einer Abnahme des Wasser-Massenstroms und (b) einer Zunahme des Wachslösungs-Massenstroms erfolgt, indem wenigstens einer aus (x) dem Wasser-Durchflussregelungsvorrichtungs-Sollwert und (y) dem Wachslösungs-Durchflussregelungsvorrichtungs-Sollwert verändert wird.

9. Wachsaufbringungssystem nach einem der Ansprüche 1-8, wobei der Sensor ein Refraktometer umfasst, das dazu ausgestaltet ist, einen Brechungsindex der gemischten Lösung zu bestimmen, wobei das Signal den Brechungsindex der gemischten Lösung darstellt.

10. Wachsaufbringungssystem nach Anspruch 1, oder nach Anspruch 9 mit Rückbezug auf Anspruch 7 oder nach Anspruch 9 mit Rückbezug auf Anspruch 8 oder nach Anspruch 4 mit Rückbezug auf Anspruch 3, wobei der Applikator (112) - einander gegenüberliegend - eine erste und eine zweite Aufbringungswalze (112a, 112b) umfasst, wobei jede Aufbringungswalze eine Walzenabdeckung umfasst, die dazu ausgestaltet ist, die gemischte Lösung aufzusaugen, wobei die erste und zweite Aufbringungswalze beabstandet sind, sodass die jeweiligen Walzenabdeckungen mit einander gegenüberliegenden Außenflächen des Werkstücks in Kontakt stehen und die gemischte Lösung darauf aufbringen, während das Werkstück sich zwischen der ersten und zweiten Aufbringungswalze bewegt.

11. Wachsaufbringungssystem nach Anspruch 1, wobei die Steuerung (116) ferner dazu ausgestaltet ist, die Wachskonzentration in der gemischten Lösung im Zeitverlauf zu überwachen und als Reaktion auf ein Bestimmen, dass die Wachskonzentration in der gemischten Lösung sich innerhalb eines bestimmten Zeitraums nicht wenigstens in einem bestimmten Maß geändert hat, zu bestimmen, dass der Sensor gereinigt werden muss.

12. Wachsaufbringungssystem nach Anspruch 11, das ferner einen Sensorreiniger (111a) umfasst, wobei die Steuerung mit dem Sensorreiniger wirkverbunden und dazu ausgestaltet ist, als Reaktion auf ein Bestimmen, dass der Sensor gereinigt werden muss, den Sensorreiniger dazu zu aktivieren, den Sensor zu reinigen.

13. Wachsaufbringungsverfahren zum Aufbringen einer Wachsbeschichtung auf ein Werkstück (WP) während eines Bandherstellungsverfahrens, wobei das Verfahren Folgendes umfasst:
Leiten von Wasser von einer Wasserquelle zu einem Mischer mit einem Wasser-Massenstrom;
Leiten einer Wachslösung von einer Wachslösungsquelle zu dem Mischer mit einem Wachslösungs-Massenstrom;
Mischen des Wassers und der Wachslösung zu einer gemischten Lösung;
Aufbringen der gemischten Lösung auf eine Außenfläche des Werkstücks;
Bestimmen einer Wachskonzentration in der gemischten Lösung; und
Ausgeben einer Angabe, welche die Wachskonzentration in der gemischten Lösung darstellt.

14. Wachsaufbringungsverfahren nach Anspruch 13, ferner umfassend ein Bestimmen, ob die Wachskonzentration in der gemischten Lösung von einem Wachskonzentrations-Sollwert abweicht.

15. Wachsaufbringungsverfahren nach Anspruch 14, ferner umfassend - als Reaktion auf ein Bestimmen, dass die Wachskonzentration in der gemischten Lösung von dem Wachskonzentrations-Sollwert abweicht - ein Ändern wenigstens eines aus (a) dem Wasser-Massenstrom und (b) dem Wachslösungs-Massenstrom, um die Abweichung zwischen der Wachskonzentration in der gemischten Lösung und dem Wachskonzentrations-Sollwert zu verringern.

## Revendications

1. Système d'application de cire (100) destiné à appliquer un revêtement de cire à une pièce de fabrication (WP) au cours d'un procédé de fabrication de sangles, le système d'application de cire comprenant :
un mélangeur (110) configuré pour mélanger une solution de cire et de l'eau pour produire une solution mélangée ;
un dispositif de régulation de débit d'eau (106) en communication fluidique avec le mélangeur et configuré pour délivrer l'eau au mélangeur à un débit massique d'eau ;
un dispositif de régulation de débit de solution de cire (108) en communication fluidique avec le mélangeur et configuré pour délivrer la solution de cire au mélangeur à un débit massique de solution de cire ;
un applicateur (112) en communication fluidique avec le mélangeur et configuré pour appliquer la solution mélangée à la pièce de fabrication ;
un capteur configuré pour analyser la solution mélangée et générer un signal indiquant une concentration de cire dans la solution mélangée ; et
un contrôleur (116) relié de façon communicante au capteur et fonctionnellement relié au dispositif de régulation de débit d'eau et au dispositif de régulation de débit de solution de cire, le contrôleur étant configuré pour :
contrôler le dispositif de régulation de débit d'eau (106) pour délivrer l'eau au mélangeur au débit massique d'eau ;
contrôler le dispositif de régulation de débit de solution de cire (108) pour délivrer la solution de cire au mélangeur au débit massique de solution de cire ;
recevoir le signal en provenance du capteur ; et
conduire un dispositif de sortie à fournir une indication représentant la concentration de cire dans la solution mélangée.

2. Système d'application de cire selon la revendication 1, dans lequel le contrôleur est en outre configuré pour déterminer la concentration de cire dans la solution mélangée en fonction du signal.

3. Système d'application de cire selon la revendication 1 ou 2, dans lequel le contrôleur est en outre configuré pour déterminer, au moins en partie en fonction du signal, si la concentration de cire dans la solution mélangée diffère d'une consigne de concentration de cire.

4. Système d'application de cire selon la revendication 3, dans lequel le contrôleur (116) est en outre configuré pour, en réponse à la détermination que la concentration de cire dans la solution mélangée diffère de la consigne de concentration de cire, contrôler (1) le dispositif de régulation de débit d'eau et/ou (2) le dispositif de régulation de débit de solution de cire de telle sorte que (a) le débit massique d'eau et/ou (b) le débit massique de solution de cire changent pour réduire la différence entre la concentration de cire dans la solution mélangée et la consigne de concentration de cire.

5. Système d'application de cire selon la revendication 4, dans lequel la consigne de concentration de cire comprend une première consigne de concentration de cire représentant une limite inférieure d'une plage souhaitée de concentrations de cire, dans lequel une deuxième consigne de concentration de cire représente une limite supérieure de la plage souhaitée de concentrations de cire, dans lequel le contrôleur (116) est en outre configuré pour, en réponse à la détermination que la concentration de cire dans la solution mélangée est inférieure à la première consigne de concentration de cire ou supérieure à la deuxième consigne de concentration de cire, contrôler (1) le dispositif de régulation de débit d'eau et/ou (2) le dispositif de régulation de débit de solution de cire de telle sorte que (a) le débit massique d'eau et/ou (b) le débit massique de solution de cire changent pour amener la concentration de cire dans la solution mélangée à l'intérieur de la plage souhaitée de concentrations de cire.

6. Système d'application de cire selon la revendication 4, ou selon la revendication 3 lorsqu'elle est dépendante de la revendication 2, dans lequel le contrôleur (116) est en outre configuré pour, en réponse à la détermination que la concentration de cire dans la solution mélangée est supérieure à la consigne de concentration de cire, contrôler (1) le dispositif de régulation de débit d'eau et/ou (2) le dispositif de régulation de débit de solution de cire de telle sorte que (a) le débit massique d'eau augmente et/ou (b) le débit massique de solution de cire diminue pour réduire la concentration de cire dans la solution mélangée.

7. Système d'application de cire selon la revendication 6, dans lequel le contrôleur (116) est en outre configuré pour, en réponse à la détermination que la concentration de cire dans la solution mélangée est inférieure à la consigne de concentration de cire, contrôler (1) le dispositif de régulation de débit d'eau et/ou (2) le dispositif de régulation de débit de solution de cire de telle sorte que (a) le débit massique d'eau diminue et/ou (b) le débit massique de solution de cire augmente pour accroître la concentration de cire dans la solution mélangée.

8. Système d'application de cire selon la revendication 7, dans lequel le contrôleur (116) est en outre configuré pour :
fournir au dispositif de régulation de débit d'eau (106) une consigne de dispositif de régulation de débit d'eau qui correspond au débit massique d'eau de telle sorte qu'une variation de la consigne de dispositif de régulation de débit d'eau fait varier le débit massique d'eau,
fournir au dispositif de régulation de débit de solution de cire (108) une consigne de dispositif de régulation de débit de solution de cire qui correspond au débit massique de solution de cire de telle sorte qu'une variation de la consigne de dispositif de régulation de débit de solution de cire fait varier le débit massique de solution de cire,
contrôler (1) le dispositif de régulation de débit d'eau et/ou (2) le dispositif de régulation de débit de solution de cire de telle sorte que (a) le débit massique d'eau augmente et/ou (b) le débit massique de solution de cire diminue en faisant varier (x) la consigne de dispositif de régulation de débit d'eau et/ou (y) la consigne de dispositif de régulation de débit de solution de cire, et
contrôler (1) le dispositif de régulation de débit d'eau et/ou (2) le dispositif de régulation de débit de solution de cire de telle sorte que (a) le débit massique d'eau diminue et/ou (b) le débit massique de solution de cire augmente en faisant varier (x) la consigne de dispositif de régulation de débit d'eau et/ou (y) la consigne de dispositif de régulation de débit de solution de cire.

9. Système d'application de cire selon l'une quelconque des revendications 1 à 8, dans lequel le capteur comprend un réfractomètre configuré pour déterminer un indice de réfraction de la solution mélangée, le signal représentant l'indice de réfraction de la solution mélangée.

10. Système d'application de cire selon la revendication 1, ou selon la revendication 9 lorsqu'elle est dépendante de la revendication 7, ou selon la revendication 9 lorsqu'elle est dépendante de la revendication 8, ou selon la revendication 4 lorsqu'elle est dépendante de la revendication 3, dans lequel l'applicateur (112) comprend des premier et deuxième rouleaux d'application opposés (112a, 112b), chaque rouleau d'application comprenant une garniture de rouleau configurée pour absorber la solution mélangée, dans lequel les premier et deuxième rouleaux d'application sont espacés de telle sorte que les garnitures de rouleau respectives touchent et appliquent la solution mélangée à des surfaces externes opposées de la pièce de fabrication lorsque la pièce de fabrication se déplace entre les premier et deuxième rouleaux d'application.

11. Système d'application de cire selon la revendication 1, dans lequel le contrôleur (116) est en outre configuré pour surveiller la concentration de cire dans la solution mélangée dans le temps et, en réponse à la détermination que la concentration de cire dans la solution mélangée n'a pas varié d'au moins une quantité stipulée dans un laps de temps stipulé, déterminer que le capteur doit être nettoyé.

12. Système d'application de cire selon la revendication 11, comprenant en outre un dispositif de nettoyage de capteur (111a), dans lequel le contrôleur est fonctionnellement relié au dispositif de nettoyage de capteur et configuré pour activer le dispositif de nettoyage de capteur pour qu'il nettoie le capteur en réponse à la détermination que le capteur doit être nettoyé.

13. Procédé d'application de cire destiné à appliquer un revêtement de cire à une pièce de fabrication (WP) au cours d'un procédé de fabrication de sangles, le procédé comprenant :
l'acheminement d'eau depuis une source d'eau jusqu'à un mélangeur à un débit massique d'eau ;
l'acheminement d'une solution de cire depuis une source de solution de cire jusqu'au mélangeur à un débit massique de solution de cire ;
le mélange de l'eau et de la solution de cire pour obtenir une solution mélangée ;
l'application de la solution mélangée sur une surface externe de la pièce de fabrication ;
la détermination d'une concentration de cire dans la solution mélangée ; et
la fourniture d'une indication représentant la concentration de cire dans la solution mélangée.

14. Procédé d'application de cire selon la revendication 13, comprenant en outre la détermination que la concentration de cire dans la solution mélangée diffère ou non d'une consigne de concentration de cire.

15. Procédé d'application de cire selon la revendication 14, comprenant en outre, en réponse à la détermination que la concentration de cire dans la solution mélangée diffère de la consigne de concentration de cire, la modification (a) du débit massique d'eau et/ou (b) du débit massique de solution de cire pour réduire la différence entre la concentration de cire dans la solution mélangée et la consigne de concentration de cire.
